# EUROPEAN PATENT SPECIFICATION

(11) **EP 0 277 808 B1**
(45) Date of publication and mention of the grant of the patent: **07.09.1994**
(21) Application number: 88300870.8
(22) Date of filing: 02.02.1988
(51) Int. Cl.: H04N 9/87, H04N 9/78

(54) **Comb filter circuits**
Kammfilterschaltungen
Circuits à filtres en peigne

(30) Priority: 03.02.1987 JP 23300/87
(43) Date of publication of application: 10.08.1988
(73) Proprietor: SONY CORPORATION, Tokyo 141 (JP)
(72) Inventor: Fukuda, Tokuya c/o Patent Division, Shinagawa-ku Tokyo 141 (JP)
(74) Representative: Cotter, Ivan John

(56) References cited:
- EP-A- 0 186 514
- US-A- 4 510 522
- IEEE JOURNAL OF SOLID-STATE CIRCUITS, vol. SC-16, no. 6, December 1981, pages 738-744, IEEE, New York, US; H. TANIGAWA et al.: "A multipurpose CCD comb filter with combing and delaying functions"

## Description

This invention relates to comb filter circuits.

When a home video tape recorder (VTR) such as an 8 mm VTR reproduces a video signal, a cross talk component between adjacent tracks is usually generated in the luminance signal and in the carrier chrominance signal. In the following description, the cross talk component between the adjacent tracks will be referred to as the "cross talk component" for simplicity.

To solve this problem, during recording, the 8 mm VTR records the video signal in such a fashion that the luminance signal and the carrier chrominance signal are interleaved with each other between an odd-numbered field track and an even-numbered field track, or that the cross talk component is interleaved with a main signal. The main signal is what is reproduced from the original track. During reproduction, the cross talk components contained in the luminance signal and in the carrier chrominance signal cancel each other out in a comb filter.

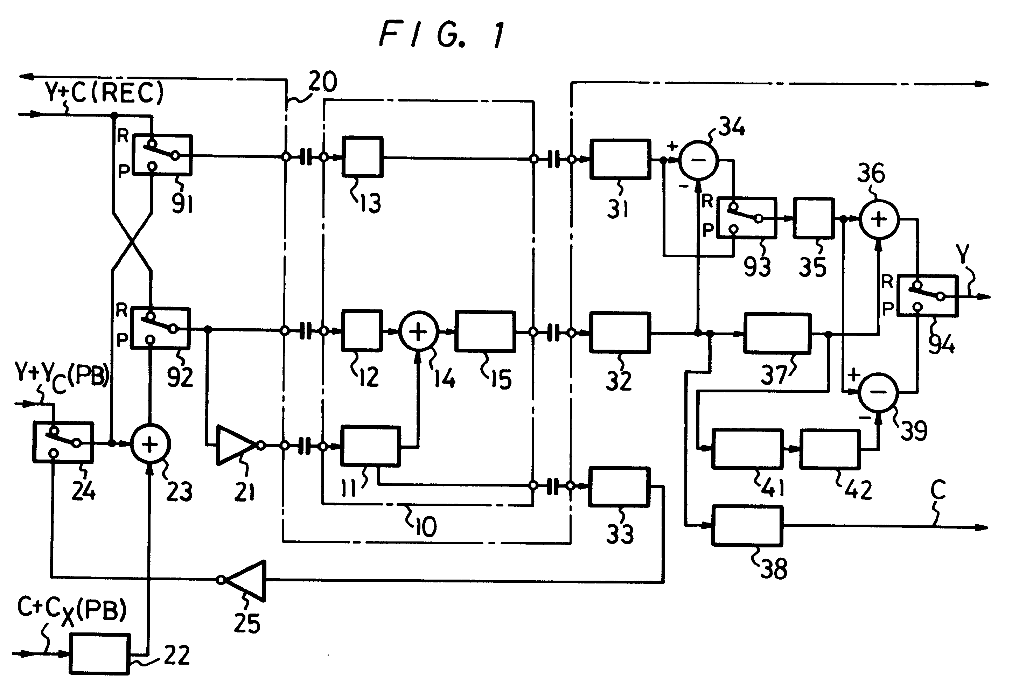

Figure 1 of the accompanying drawings illustrates an example of a previously proposed comb type filter circuit for performing the above signal processing. In this example, a composite colour TV signal (Y + C) is separated into a luminance signal Y and a carrier chrominance signal C.

The comb type filter circuit shown in Figure 1 comprises a comb filter section 10 formed of an integrated circuit (IC), and an integrated circuit (IC) section 20 that includes a part of a processing circuit for processing the luminance signal Y and the carrier chrominance signal C.

The comb filter circuit section 10 includes a charge-coupled device (CCD) delay circuit 11 having a delay time of 1H + ΔD, where 1H represents one horizontal period and ΔD represents a predetermined number of bits of delay time, and CCD delay circuits 12 and 13 each having the same delay time ΔD. Accordingly, since the output signals from the delay circuit 11 and the delay circuit 12 (and 13) have a time difference of just one horizontal period (1H) between them, it is possible to form a comb filter circuit by adding or subtracting these output signals, as is described below in detail. The comb filter circuit section 10 also includes an adding circuit 14 and an attenuator 15, which are described below.

The delay circuit 11 has the extra delay time of ΔD and the comb filter circuit section 10 includes the delay circuits 12 and 13 for the following reason. Although the delay time of a CCD delay circuit can accurately be determined by a clock signal, the gain versus temperature characteristic of a CCD delay circuit fluctuates considerably so that the fluctuating gain versus temperature characteristic should be compensated for in some way. To solve these problems, in the comb filter circuit section 10, signals, not delayed by the CCD delay circuit 11, are delayed by the CCD delay circuit 12 (and 13), whereby the fluctuating gain versus temperature characteristic of each signal is compensated for. Further, since the CCD delay circuits 12 and 13 each delay the signal by the delay time of ΔD, the delay time of the CCD delay circuit 11 is determined as 1H + ΔD so that it can remove the time difference therebetween.

The IC section 20 comprises band-pass filters 22 and 38 each having a pass band including the carrier chrominance signal C, a switching circuit 24 that is connected in the opposite state to that shown in Figure 1 when a dropout occurs, and low-pass filters 31 to 33 for cancelling unwanted out-band components such as a clock component of a CCD delay circuit. In this example, each of the low-pass filters 31 to 33 has a delay time of ΔD.

The IC section 20 further comprises a delay circuit 35 for phase compensation, a trap circuit 37 for eliminating the band components of the carrier chrominance signal C, a limiter 41, an attenuator 42 and recording and reproducing change-over switching circuits 91 to 94. Each of the switching circuits 91 to 94 has a movable contact that is connected to a contact R during recording and to a contact P during reproduction.

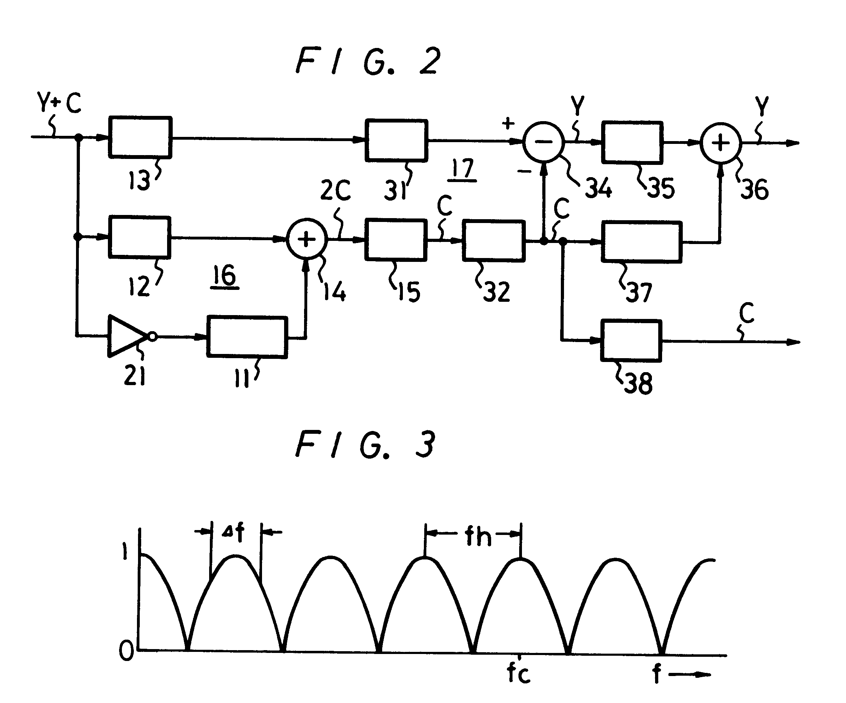

During recording, the filter circuit is connected in the state illustrated in Figure 2, thereby to separate the luminance signal Y and the chrominance signal C from the composite colour TV signal (Y + C). The switches 91 and 92 are set in their R positions and are omitted from Figure 2 for the sake of simplicity.

As illustrated in Figure 2, the incoming composite colour TV signal (Y + C) is supplied through the delay circuit 12 to the adding circuit 14 and also is supplied through a phase inverting amplifier 21 and the delay circuit 11 to the adding circuit 14, forming a C-type comb filter 16. Thus, the adding circuit 14 produces a signal 2C having a level twice as high as that of the carrier chrominance signal C.

Since the C-type comb filter 16 presents a C-type comb filter characteristic over the whole band of the composite colour TV signal (Y + C), as shown in the frequency characteristic diagram of Figure 3, the signal 2C from the adding circuit 14 is supplied to the attenuator 15, in which it is attenuated into the carrier chrominance signal C of the original level, and is then supplied through the low-pass filter 32 to the band-pass filter 38, a subtracting circuit 34 and the trap circuit 37. Thus, the band-pass filter 38 produces only the original signal C. In Figure 3, fc represents the colour sub-carrier frequency and fh represents the horizontal frequency.

As shown in Figure 2, the composite colour TV signal (Y + C) is supplied through the delay circuit 13 and the low-pass filter 31 to the subtracting circuit 34, and the signal C from the low-pass filter 32 is supplied to the subtracting circuit 34, forming a Y-type comb filter 17. Thus, the subtracting circuit 34 produces the luminance signal Y.

Since the Y-type comb filter 17 presents a Y-type comb filter characteristic for the whole band of the signal (Y + C), the luminance signal Y from the subtracting circuit 34 is supplied (through the switching circuit 93 shown in Figure 1) to the delay circuit 35 to compensate for the delay of the trap circuit 37, and then supplied to an adding circuit 36, while the signal C with the C-type comb filter characteristic for the whole band from the low-pass filter 32 is supplied through the trap circuit 37 to the adding circuit 36. Thus, the adding circuit 36 produces the signal Y which presents the Y-type comb filter characteristic only for the band of the signal C.

Then, the thus-separated, predetermined format signals Y and C are recorded on a magnetic tape (not shown).

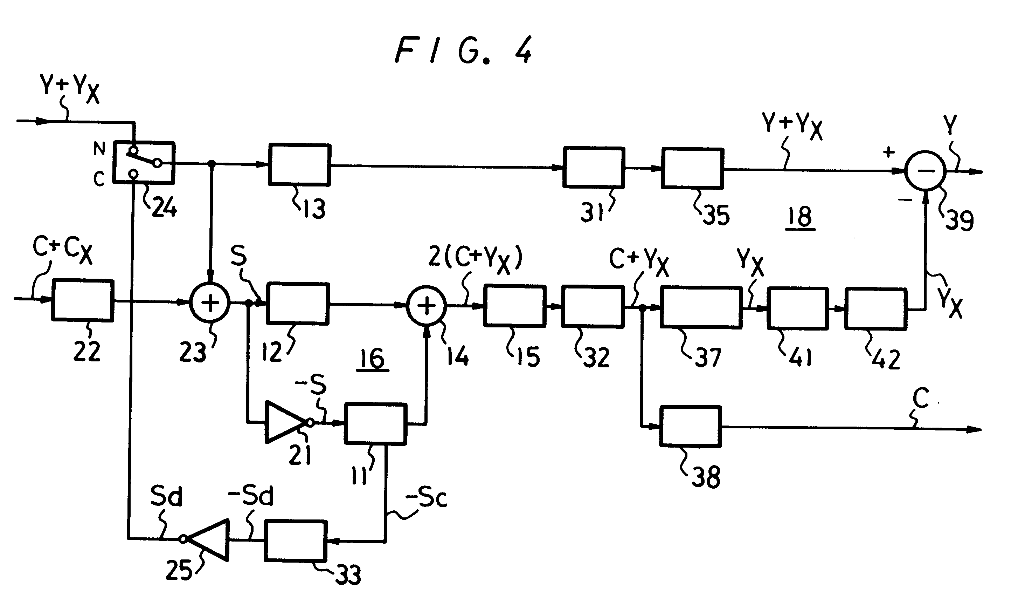

During reproduction, the filter circuit of Figure 1 is connected as shown in Figure 4 whereby cross talk components Y_{X} and C_{X} are removed from the reproduced luminance signal Y and carrier chrominance signal C, respectively.

Referring to Figure 4, the reproduced carrier chrominance signal C with the cross talk component C_{X} from the tape, that is a signal (C + C_{X}), is supplied through the band-pass filter 22 to an adding circuit 23. At the same time, the reproduced luminance signal Y with the cross talk component Y_{X} from the tape, that is a signal (Y + Y_{X}), is supplied through a normal side contact N of the switching circuit 24 to the adding circuit 23. Thus, the adding circuit 23 produces a summed signal S that can be expressed as (Y + Y_{X} + C + C_{X}). The signal S is supplied to the C-type comb filter 16, causing the low-pass filter 32 connected to it to produce the signal C and the cross talk component Y_{X} (C + Y_{X}). Then, the signal (C + Y_{X}) is supplied to the band-pass filter 38 which produces the signal C.

Further, the signal (Y + Y_{X}) from the switching circuit 24 is supplied through the delay circuit 13, the low-pass filter 31 and the delay circuit 35 to a subtracting circuit 39. Simultaneously, the signal (C + Y_{X}) from the low-pass filter 32 is supplied to the trap circuit 37 which then produces the cross talk component Y_{X}. This cross talk component Y_{X} is supplied through the limiter 41 and the attenuator 42 to the subtracting circuit 39, forming a Y-type comb filter circuit 18. Thus, the subtracting circuit 39 produces the signal Y.

Since the cross talk component Y_{X} is also a non-vertical correlation component and is linearly supplied to the limiter 41 and the attenuator 42, the filter 18 changes the depth (trough portion) of the curve of the out-band frequency in accordance with the cross talk component Y_{X}.

The delay circuit 11 is provided with an intermediate terminal or tap from which a signal -Sc which is delayed by, for example, 1H - ΔD, is derived. The signal -Sc is supplied to the low pass filter 33 and is thereby delayed by the delay time ΔD. in other words, the signal -Sc is converted into a signal -Sd with a delay time of 1H by adding the delay time 1H - ΔD of the delay circuit 11 and the delay time ΔD. The signal -Sd is supplied to a phase inverting amplifier 25 and is thereby inverted in phase to be a signal Sd, which is fed to the switching circuit 24. When a dropout occurs, the switching circuit 24 is connected to a compensating side contact C thereof in response to a dropout detected output signal from a dropout detecting circuit (not shown), whereby the dropout is compensated for by the one horizontal period delayed signal Sd.

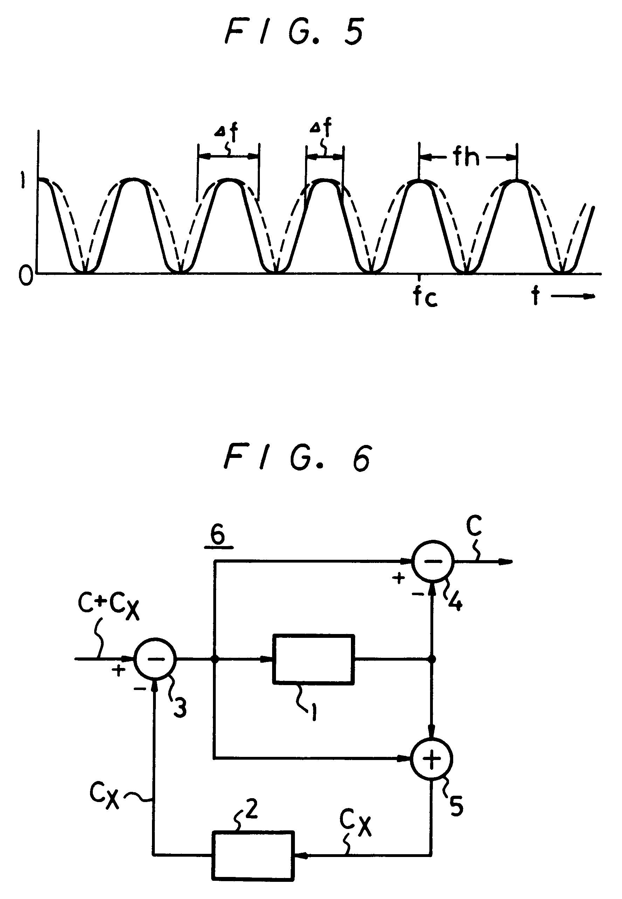

However, since the C-type comb filter 16 presents the C-type comb filter characteristic merely by subtracting the main signal and the one horizontal period delayed signal thereof, its pass band width Δf is broad, as shown by a dashed line in Figure 5. Thus, the C-type comb filter 16 cannot remove the cross talk component C_{X} sufficiently.

To overcome this shortcoming, the C-type comb filter could be modified into a C-type comb filter 6 as shown in Figure 6, which is formed as a feedback type which can improve its C-type comb filter characteristic.

The C-type comb filter 6 comprises a one horizontal period delay circuit 1, a band-pass filter 2, subtracting circuits 3 and 4 and an adding circuit 5. The cross talk component C_{X} is derived from the adding circuit 5 and is fed through the band-pass filter 2 back to the subtracting circuit 3.

Accordingly, since the C-type comb filter characteristic of the filter 6 has a narrow pass band width Δf as shown by a solid line in Figure 5, it cancels out the cross talk component C_{X} in an improved manner with respect to the C-type comb filter 16.

However, the delay time of the delay circuit 1 of the C-type comb filter 6 must be accurately selected to be one horizontal period. If the delay time of the delay circuit 1 is selected to be 1H+ΔD, like the CCD delay circuit 11, a time difference of ΔD occurs between the input signal (C+C_{X}) and the feedback signal C_{X} so that the C-type comb filter 6 cannot present a C-type comb filter characteristic.

To present a C-type comb filter characteristic, the delay circuit 1 in the C-type comb filter 6 must be formed of a glass delay line. However, a glass delay line is disadvantageous from the standpoints of assembly parts number and mounting space.

European Published Patent Application EP-A-0 186,514 describes a comb filter of a type that uses negative feedback from the output of a delay element to the input of that delay element in order to improve the frequency characteristics of the comb filter.

United States Patent US-A-4,510,522 describes a comb filter using charge transfer devices at the delay elements. A pair of charge transfer devices are fed in parallel with an input signal and are arranged to have a relative difference in the delay they provide of one horizontal period.

An aspect of the present invention is defined in claim 1.

Preferred embodiments of the invention described hereinbelow each provide an improved C-type comb filter circuit. The C-type comb filter circuit can present excellent C-type comb filter characteristics, can be formed as an integrated circuit, can provide manufacturing advantages such as reducing the number of assembly parts and reducing mounting space, can compensate for a dropout signal, and is suitable for use with a video tape recorder such as an 8 mm video tape recorder or the like.

The invention will now be further described, by way of illustrative and non-limiting example, with reference to the accompanying drawings, in which like references represent the same or similar elements and parts throughout, and in which:
Figure 1 is a block diagram of a previously proposed comb type filter circuit;
Figure 2 is a block diagram showing the connection state of the filter circuit of Figure 1 during recording;
Figure 3 represents the filter characteristic of the filter circuit when in the connection state shown in Figure 2;
Figure 4 is a block diagram showing the connection state of the filter circuit of Figure 1 during reproduction;
Figure 5 represents the filter characteristic of the filter circuit when in the connection state shown in Figure 4;
Figure 6 is a block diagram of another previously proposed filter circuit that is formed as a feedback type filter circuit;
Figure 7 is a block diagram of a C-type comb filter circuit embodying the invention;
Figure 8 is a block diagram of an equivalent circuit of a part of the C-type comb filter circuit shown in Figure 7;
Figure 9 represents the frequency characteristic of the equivalent circuit shown in Figure 8; and
Figure 10 is a block diagram of another C-type comb filter circuit embodying the invention.

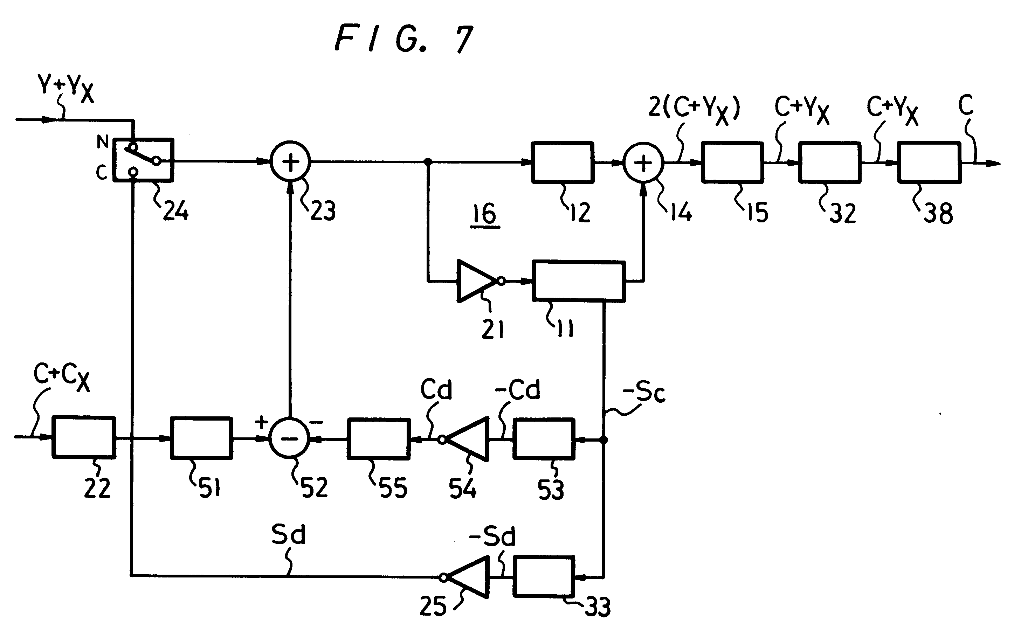

Figure 7 illustrates a C-type comb filter circuit embodying the invention, mainly showing the connection state thereof during reproduction. In Figure 7, parts corresponding to like parts of Figure 4 are designated by the same references and therefore need not be described in detail again.

In Figure 7, the signal (C + C_{X}) from the band-pass filter 22 is supplied to an attenuator 51, in which it is attenuated into a signal of a predetermined level (1 - k), where 0 < k < 1, which is supplied through a subtracting circuit 52 to the adding circuit 23.

The CCD delay circuit 11 is provided with an intermediate connection terminal such as a tap or the like. The signal -Sc with a delay time 1H - D is derived from this intermediate tap and is supplied to a band-pass filter 53 which then produces a signal -(C + C_{X}). However, at that time, since the delay time of the band-pass filter 53 is selected to be the period ΔD, the signal -(C + C_{X}) from the filter 53 becomes a signal -Cd whose delay time is one horizontal period (1H), which is provided by adding the delay time ΔD and the delay time 1H - ΔD of the CCD delay circuit 11.

The signal -Cd is supplied to a phase inverting amplifier 54 and is thereby inverted in phase to be a signal Cd. The signal Cd is attenuated into a signal of a predetermined level k by an attenuator 55 and then fed to the subtracting circuit 52.

Further, the signal -Sc from the delay circuit 11 is converted to a signal Sd through the low-pass filter 33 and the phase inverting amplifier 25. The signal Sd is then supplied to the switching circuit 24 as a dropout compensating signal.

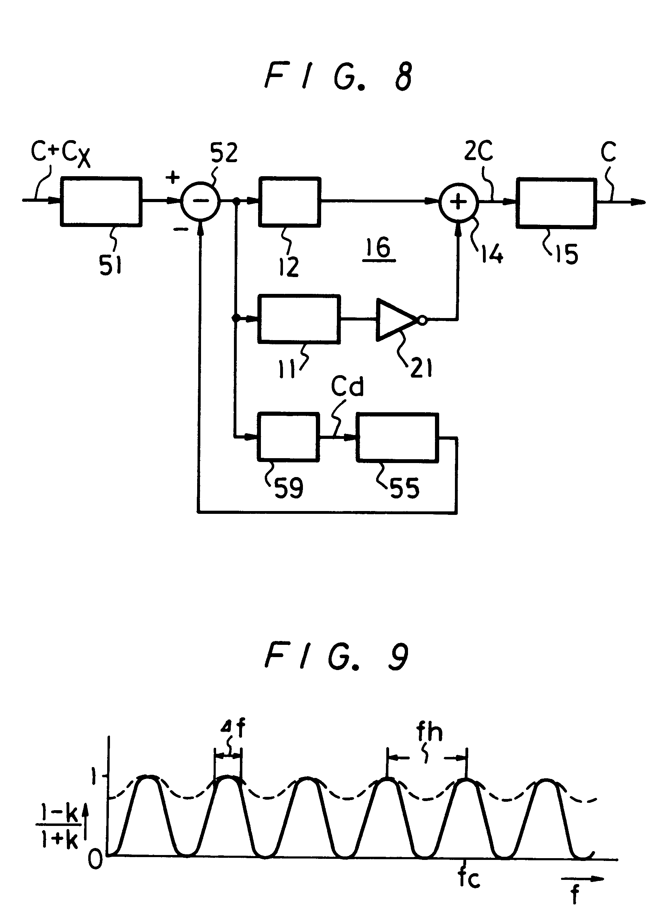

According to the thus-made arrangement, an equivalent circuit for processing the signal (C + C_{X}) is formed as shown in Figure 8. Referring to Figure 8, the intermediate tap of the CCD delay circuit 11 and the band-pass filter 53 constitute a one horizontal delay circuit 59. Further, the phase inverting amplifier 54 may be removed by reversing the position of the phase inverting amplifier 21 and the CCD delay circuit 11.

According to this equivalent circuit, since the one horizontal period delayed signal Cd is fed back to the input side thereof, the frequency characteristic thereof has a narrow pass band width Δf as shown by a solid line in Figure 9. Further, if the ratio (1 - k)/(1 + k) is controlled in accordance with the vertical correlation, the frequency characteristic of the above equivalent circuit is changed to be as shown by the dashed line in Figure 9, thus producing a dynamic frequency characteristic.

According to the present embodiment, as described above, since the CCD delay circuit 11 is provided with the intermediate tap and the delayed signal from the intermediate tap is fed back to the input side of the filter circuit, a feedback C-type comb filter can be realised, thus producing an excellent comb-filter characteristic with a narrow pass band width Δf.

Since the delay circuit 11 can be formed as a CCD delay circuit, the C-type comb filter circuit can be formed as an integrated circuit (IC). Thus, the C-type comb filter circuit is advantageous from the standpoints of assembly parts number and mounting space, as compared with a comb filter circuit that employs a glass delay line.

Further, since the C-type comb filter circuit can compensate for dropout, it is suitable for use as a comb filter circuit for a video tape recorder.

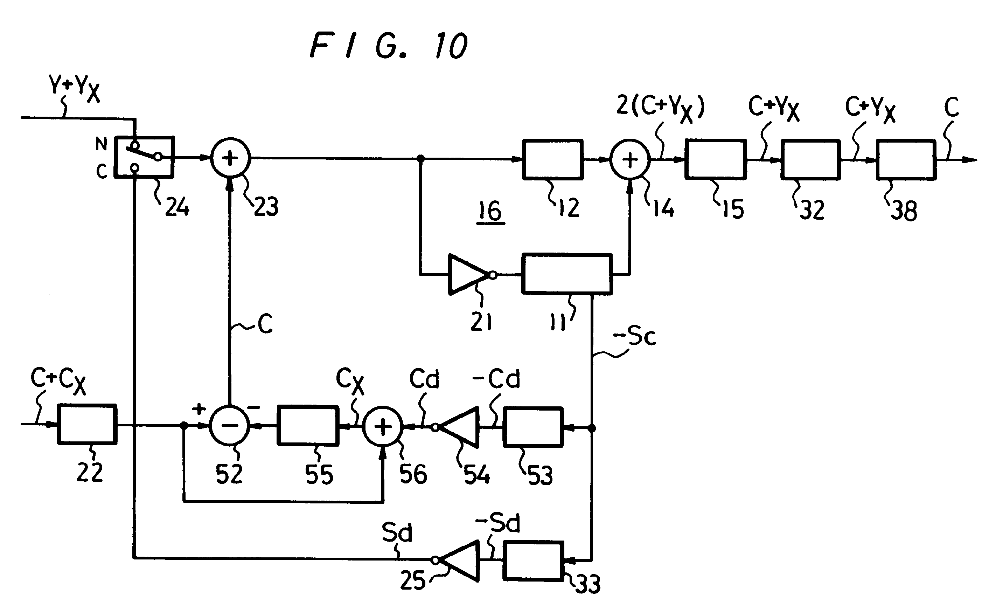

Figure 10 illustrates another C-type comb filter circuit embodying the invention. In Figure 10, parts corresponding to like parts of the first embodiment shown in Figure 8 are designated by the same references and therefore will not be described again in detail.

In Figure 10, the signal Cd from the phase inverting amplifier 54 is added to the signal (C + C_{X}) from the band-pass filter 22 by an adding circuit 56 so that the adding circuit 56 produces as its output the cross talk component C_{X}. Thereafter, the cross talk component C_{X} is fed back through the attenuator 55 to be subtracted in the subtracting circuit 52. Therefore, an equivalent circuit for processing the signal C and the cross talk component C_{X} is made to be the same as that shown in Figure 6.

In this case, it should be noted that the period ΔD of the delay time 1H-ΔD of the signal at the intermediate tap of the delay circuit 11 must be made equal to the delay time of the low-pass filter 33 but may be different from those of the delay circuits 12 and 13.

If a C-type comb filter circuit embodying the present invention is used to process a video signal according to the PAL (phase alternation line) system, the delay time of the CCD delay circuit 11 may be selected to be 2H + ΔD.

According to the embodiments of the invention set forth above, since the CCD delay circuit 11 is provided with an intermediate tap and the delayed signal from the intermediate tap is fed back to the input side of the C-type comb filter, a feedback type comb filter can be formed with an excellent comb filter characteristic having a narrow pass band width Δf.

Further, since the delay circuit 11 is formed of a CCD, the C type comb filter circuit can be formed as an integrated circuit (IC). This brings about significant advantages from the standpoints of assembly parts number and mounting space, as compared with a C-type comb filter circuit that employs a glass delay line.

Furthermore, since the C-type comb filter circuit is capable of compensating for dropout, it is suitable as a comb filter circuit for use in a video tape recorder.

## Claims

1. A colour video signal processing apparatus for processing a signal reproduced from tracks on a magnetic tape in which the reproduced signal includes luminance and chrominance signals having non-overlapping frequency bands and each including a respective crosstalk component from tracks adjacent a track on said magnetic tape being reproduced and in which the cross talk components are frequency interleaved relative to a colour video signal from a track being reproduced, the apparatus having a filter circuit comprising:
a) input terminal means (23) for receiving a reproduced colour carrier signal (C) and a reproduced luminance signal (Y) and operative to produce a summed output signal therefrom;
b) first delay circuit means (12) which is formed of a charge coupled device and is connected to the input terminal means (23) for delaying the summed output signal by a predetermined delay time ΔD;
c) second delay means (11) which is formed of a charge-coupled device and is connected to the input terminal means (23) for delaying the summed output signal by an integral multiple of a video horizontal scan time period (H)+ΔD; and
d) signal combining means (14) connected to receive, at respective first and second inputs, said summed output signal as delayed by the first delay circuit means (12) and the summed output signal as delayed by the second delay circuit means (11) for producing an output signal formed of the sum thereof and comprising a colour carrier signal (C) and a cross talk component (Y_{X}) of said luminance signal; characterized by
e) the second delay means (11) including intermediate tap means;
f) means for deriving a delayed signal from the intermediate tap means; and
g) negative feedback means (52-55; 52-56) for subtracting the derived delayed signal from the reproduced colour carrier signal supplied to the input terminal means (23),
wherein the negative feedback means (52-55; 52-56) comprises a band-pass filter (53) which has a delay time of ΔD′ and the intermediate tap means is operative to derive a signal whose delay time is equal to an integral multiple of said video horizontal scan time period (H) - ΔD′.

2. A colour video signal processing apparatus according to claim 1, comprising:
first attenuation means (51) for attenuating the reproduced colour carrier signal to a predetermined level (1 - k), where 0 < k < 1, before the reproduced colour carrier signal is supplied to the input terminal means (23);
second attenuation means (55) for attenuating the derived delayed signal to a predetermined level k; and
subtraction means (52), within the negative feedback means (52-55), connected to be supplied with the attenuated reproduced colour carrier signal and the attenuated delayed derived signal for supplying the difference therebetween to the input terminal means (23).

3. A colour video signal processing apparatus according to claim 1, wherein the negative feedback means (52-56) comprises:
adding means (56) for combining the derived delayed signal and the reproduced colour carrier signal and outputting the sum thereof;
attenuating means (55) for attenuating by one half the output of the adding means (56); and
subtraction means (52) connected to be supplied with the reproduced colour carrier signal and the attenuated output of the adding means (56) for supplying the difference therebetween to the input terminal means (23).

4. A colour video signal processing apparatus according to claim 1, including a bandpass filter (22) for receiving the reproduced colour carrier signal and passing only said colour carrier signal and said colour carrier signal crosstalk component to the input terminal means (23).

5. A colour video signal processing apparatus according to claim 1, including a low-pass filter (32) connected in series with a band-pass filter (38) and connected to be supplied with the output signal of the signal combining means (14) for passing only said colour carrier signal.

## Patentansprüche

1. Farb-Videosignalverarbeitungsgerät zum Verarbeiten eines Signals, das aus Spuren auf einem Magnetband wiedergegeben ist, wobei das wiedergegebene Signal Leuchtdichte- und Farbdifferenzsignale enthält, die nichtüberlappende Frequenzbänder haben und jeweils eine betreffende Übersprechkomponente von Spuren enthalten, welche einer Spur auf dem Magnetband benachbart sind, die wiedergegeben wird, und wobei die Übersprechkomponenten relativ zu einem Farb-Videosignal aus einer Spur, die wiedergegeben wird, frequenzmäßig verschachtelt sind, welches Gerät eine Filterschaltung hat, die umfaßt:
a) ein Eingangsanschlußmittel (23) zum Aufnehmen eines wiedergegebenen Farbträgersignals (C) und eines wiedergegebenen Leuchtdichtesignals (Y), welches Eingangsanschlußmittel wirksam ist, um ein summiertes Ausgangssignal aus diesen zu erzeugen,
b) eine erste Verzögerungsschaltung (12), die aus einer ladungsgekoppelten Einrichtung gebildet ist und mit dem Eingangsanschlußmittel (23) zum Verzögern des summierten Ausgangssignals um eine vorbestimmte Verzögerungszeit ΔD verbunden ist,
c) eine zweite Verzögerungsschaltung (11), die aus einer ladungsgekoppelten Einrichtung gebildet ist und mit dem Eingangsanschlußmittel (23) zum Verzögern des summierten Ausgangssignals um ein ganzzahliges Vielfaches der Video-Horizontalabtastzeitperiode (H)+ΔD verbunden ist, und
d) ein Signalzusammensetzungsmittel (14), das zum Aufnehmen des summierten Ausgangssignals, wie es durch die erste Verzögerungsschaltung (12) verzögert ist, und des summierten Ausgangssignals, wie es durch die zweite Verzögerungsschaltung (11) verzögert ist, an betreffenden ersten und zweiten Eingängen zum Erzeugen eines Ausgangssignals geschaltet ist, das aus der Summe aus diesen gebildet ist und ein Farbträgersignal (C) sowie eine Übersprechkomponente (Y_{X}) des Leuchtdichtesignals enthält,
**gekennzeichnet** durch
e) die zweite Verzögerungsschaltung (11), welche ein Zwischenabgriffsmittel enthält,
f) Mittel zum Ableiten eines verzögerten Signals von dem Zwischenabgriffsmittel und
g) Gegenkopplungsmittel (52-55; 52-56) zum Subtrahieren des abgeleiteten verzögerten Signals von dem wiedergegebenen Farbträgersignal, das dem Eingangsanschlußmittel zugeführt wird,
wobei die Gegenkopplungsmittel (52-55; 52-56) ein Bandpaßfilter (53) enthalten, das eine Verzögerungszeit von ΔD′ hat, und das Zwischenabgriffsmittel wirksam ist, um ein Signal abzuleiten, dessen Verzögerungszeit gleich einem ganzzahligen Vielfachen der Video-Horizontalabtastzeitperiode (H) - ΔD′ ist.

2. Farb-Videosignalverarbeitungsgerät nach Anspruch 1, das umfaßt:
ein erstes Dämpfungsmittel (51) zum Dämpfen des wiedergegebenen Farbträgersignals auf einen vorbestimmten Pegel (1 - k), wobei 0 < k < 1 ist, bevor das wiedergegebene Farbträgersignal dem Eingangsanschlußmittel (23) zugeführt wird,
ein zweites Dämpfungsmittel (55) zum Dämpfen des abgeleiteten verzögerten Signals auf einen vorbestimmten Pegel k und
ein Subtrahiermittel (52) innerhalb der Gegenkopplungsmittel (52-55), das geschaltet ist, um mit dem gedämpften wiedergegebenen Farbträgersignal und dem verzögerten abgeleiteten Signal zum Liefern der Differenz zwischen diesen an das Eingangsanschlußmittel (23) versorgt zu werden.

3. Farb-Videosignalverarbeitungsgerät nach Anspruch 1, bei dem die Gegenkopplungsmittel (52 - 55) umfassen:
ein Addiermittel (56) zum Zusammensetzen des abgeleiteten verzögerten Signals und des wiedergegebenen Farbträgersignals und zum Ausgeben der Summe derselben,
ein Dämpfungsmittel (55) zum Dämpfen das Ausgangssignals des Addiermittels (56) um die Hälfte und
ein Subtrahiermittel (52), das geschaltet ist, um mit dem wiedergegebenen Farbträgersignal und dem gedämpften Ausgangssignal des Addiermittels (56) zum Liefern der Differenz zwischen diesen an das Eingangsanschlußmittel (23) versorgt zu werden.

4. Farb-Videosignalverarbeitungsgerät nach Anspruch 1, das ein Bandpaßfilter (22) zum Aufnehmen des wiedergegebenen Farbträgersignals und zum Durchleiten nur des Farbträgersignals und der Farbträgersignal-Übersprechkomponente zu dem Eingangsanschlußmittel (23 enthält.

5. Farb-Videosignalverarbeitungsgerät nach Anspruch 1, das ein Tiefpaßfilter (32) enthält, welches in Reihe mit einem Bandpaßfilter (38) angeordnet ist und geschaltet ist, um mit dem Ausgangssignal des Signalzusammensetzungsmittels (14) zum Durchleiten nur des Farbträgersignals versorgt zu werden.

## Revendications

1. Dispositif de traitement de signal vidéo en couleurs pour traiter un signal reproduit à partir de pistes sur une bande magnétique, dans lequel le signal reproduit comprend des signaux de luminance et de chrominance ayant des bandes de fréquences non chevauchantes et chacun comprenant une composante de diaphonie respective provenant de pistes adjacentes à une piste sur ladite bande magnétique qui est en cours de reproduction et dans lequel les composantes de diaphonie sont imbriquées en fréquence par rapport à un signal vidéo en couleurs issu d'une piste en cours de reproduction, le dispositif comportant un circuit de filtre comprenant :
a) un moyen formant borne d'entrée (23) pour recevoir un signal de chrominance (C) reproduit et un signal de luminance (Y) reproduit et qui sert à produire à partir de ceux-ci un signal de sortie additionné ;
b) un premier moyen formant circuit à retard (12) qui est formé d'un dispositif à couplage de charge et qui est connecté au moyen formant borne d'entrée (23) pour retarder le signal de sortie additionné d'un temps de retard ΔD prédéterminé ;
c) un second moyen de retardement (11) qui est formé d'un dispositif à couplage de charge et qui est connecté à l'entrée du moyen formant borne (23) pour retarder le signal de sortie additionné d'un multiple entier d'une période de temps de balayage horizontal vidéo (H) + ΔD ;
d) un moyen de combinaison de signal (14) connecté pour recevoir, au droit de première et seconde entrées respectives, ledit signal de sortie additionné tel qu'il est retardé par le premier moyen formant circuit à retard (12) et le signal de sortie additionné tel qu'il est retardé par le second moyen formant circuit à retard (11) pour produire un signal de sortie formé de leurs sommes et comprenant un signal de chrominance (C) et une composante de diaphonie (Y_{X}) dudit signal de luminance ;
caractérisé par :
e) le fait que le second moyen de retardement (11) comprend un moyen formant prise intermédiaire ;
f) un moyen pour obtenir un signal retardé provenant du moyen formant prise intermédiaire ;
g) un moyen de contre-réaction négative (52 à 55 ; 52 à 56) pour soustraire le signal retardé obtenu à partir du signal de chrominance reproduit délivré au moyen formant borne d'entrée (23) ;
dans lequel le moyen de contre-réaction négative (52 à 55 ; 52 à 56) comprend un filtre passe-bande (53) qui possède un temps de retard de ΔD′ et dans lequel le moyen formant prise intermédiaire sert à obtenir un signal dont le temps de retard est égal à un multiple entier de ladite période de temps de balayage horizontal vidéo (H) - ΔD′.

2. Dispositif de traitement de signal vidéo en couleurs selon la revendication 1, comprenant :
un premier moyen d'atténuation (51) pour atténuer le signal de chrominance reproduit jusqu'à un niveau (1-k) prédéterminé, où 0 < k < 1, avant que le signal de chrominance reproduit ne soit délivré au moyen formant borne d'entrée (23) ;
un second moyen d'atténuation (55) pour atténuer le signal retardé obtenu jusqu'à un niveau k prédéterminé ;
un moyen de soustraction (52), à l'intérieur du moyen de contre-réaction négative (52 à 55), connecté pour être alimenté avec le signal de chrominance reproduit atténué et le signal obtenu retardé atténué pour délivrer, au moyen formant borne d'entrée (23), la différence entre eux.

3. Dispositif de traitement de signal vidéo en couleurs selon la revendication 1, dans lequel le moyen de contre-réaction négative (52 à 56) comprend :
un moyen d'addition (56) pour combiner le signal retardé obtenu et le signal de chrominance reproduit et pour sortir leur somme ;
un moyen d'atténuation (55) pour atténuer de moitié la sortie du moyen d'addition (56) ; et,
un moyen de soustraction (52) connecté pour être alimenté avec le signal de chrominance reproduit et la sortie atténuée du moyen d'addition (56) pour délivrer, au moyen formant borne d'entrée (23), la différence entre eux.

4. Dispositif de traitement de signal vidéo en couleurs selon la revendication 1, comprenant un filtre passe-bande (22) pour recevoir le signal de chrominance reproduit et pour laisser passer seulement ledit signal de chrominance et ladite composante de diaphonie du signal de chrominance vers le moyen formant borne d'entrée (23).

5. Dispositif de traitement de signal vidéo en couleurs selon la revendication 1, comprenant un filtre passe-bas (32) connecté en série avec un filtre passe-bande (38) et connecté pour être alimenté avec le signal de sortie du moyen de combinaison de signal (14) pour laisser passer seulement ledit signal de chrominance.
